# EUROPEAN PATENT SPECIFICATION

(11) **EP 1 564 277 B1**
(45) Date of publication and mention of the grant of the patent: **06.06.2007**
(21) Application number: 02779999.8
(22) Date of filing: 05.11.2002
(51) Int. Cl.: C09K 5/00, C23F 11/10

(54) **HEAT TRANSFER MEDIUM LIQUID COMPOSITION**
ZUSAMMENSETZUNG EINER WûRMETRûGERFL SSIGKEIT
COMPOSITION LIQUIDE D'AGENT CALOPORTEUR

(43) Date of publication of application: 17.08.2005
(73) Proprietor: Shishiai-Kabushikigaisha, Seki-shi, Gifu 501-3923 (JP)
(72) Inventor: TSUJII, Tetsuya, c/o SHISHIAI-KABUSHIKIGAISHA, Seki-shi, Gifu 501-3923 (JP); EGAWA, Hiroshi, c/o SHISHIAI-KABUSHIKIGAISHA, Seki-shi, Gifu 501-3923 (JP)
(74) Representative: Sarpi, Maurizio
(86) International application number: PCT/JP2002/011542
(87) International publication number: WO 2004/041956

(56) References cited:
- DE-A1- 4 131 516
- JP-A- 2000 096 273
- JP-A- 2000 239 658
- JP-A- 2001 279 235
- JP-A- 2002 038 137
- US-B1- 6 203 719
- US-B1- 6 221 275
- US-B1- 6 432 320
- XUAN Y ET AL: "HEAT TRANSFER ENHENCEMEMT OF NANOFLUIDS" INTERNATIONAL JOURNAL OF HEAT AND FLUID FLOW, BUTTERWORTH SCIENTIFIC LTD, GUILDFORD,, GB, vol. 21, no. 1, 2000, pages 58-64, XP000961518 ISSN: 0142-727X
- LEE S ET AL: "MEASURING THERMAL CONDUCTIVITY OF FLUIDS CONTAINING OXIDE NANOPARTICLES" JOURNAL OF HEAT TRANSFER, AMERICAN SOCIETY OF MECHANICAL ENGINEERS,, US, vol. 121, no. 2, 1999, pages 280-289, XP000961462 ISSN: 0022-1481

## Description

### Technical Field

The present invention relates to a heat transfer medium liquid composition that can be used as a coolant for an internal-combustion engine, a motor and the like, a heat transfer medium for a hot-water supply, heating, cooling and freezing system, or a heat transfer medium for a snow melting system, road heating and the like. In particular, the present invention relates to a heat transfer medium liquid composition which is excellent in dispersion stability of metal and/or metal oxide particles and high in thermal conductivity.

### Background Art

Conventionally, a heat transfer medium containing water or glycol such as ethylene glycol as the main component has been used as a coolant for an internal-combustion engine, a motor and the like, a heat transfer medium for a hot-water supply, heating, cooling and freezing system, or a heat transfer medium for a snow melting system, road heating and the like.

The heat exchange property of these heat transfer mediums is controlled by the specific heat or thermal conductivity of water or glycol as the main component, giving not necessarily sufficient heat transfer performance for elevating system temperature, miniaturizing a heat exchanger, and severe operating conditions.

In order to compensate for the lack of the aforementioned heat transfer performance, a method is proposed in which metal or metal oxide fine particles having a high thermal conductivity are added in a heat transfer medium to improve the heat transfer performance of the heat transfer medium itself (for example, refer to Transactions of the ASME, Journal of Heat Transfer 121 pp. 280-289, 1999).

In the literature, there is reported that a dispersion liquid prepared by dispersing alumina or cupper fine particles of nano size in water or an aqueous solution of ethylene glycol has a higher thermal conductivity compared with an aqueous solution containing no fine particle.

Also, other literature reports that a high thermal conductivity was obtained for a dispersion system of water-alumina and water-titanium oxide (for example, refer to "Chou biryushi bunsan ni yoru ekitaino netsudendoritsu to nenseiritus no henka (Alternation of Thermal conductivity and Viscosity of Liquid by Dispersing Ultra-Fine Particles.), Netsu Bussei 7[4] 1993, pp. 227-233).

Alumina or cupper fine particles represented in these literatures are prepared by a pulverization method with a ball mill, a jet pulverizer or the like, or a synthesizing method such as the evaporation condensation method or chemical deposition method. Fine particles prepared by these methods usually have such characteristic that they have better dispersibility in a solvent such as water compared with particles having a size of micrometer or more. Therefore, dispersion of these fine particles in a solvent (heat transfer medium) by a small amount exerts such effect that the thermal conductivity of the heat transfer medium itself can be enhanced.

However, since various kinds of corrosion inhibitors are added in order to inhibit corrosion of metal parts in conventional heat transfer mediums, although particles are dispersed well in water or the like, there is such problem that metal and/or metal oxide fine particles with the charge react with an ionic metal corrosion inhibitor to generate a deposition or a supernatant and, as the result, sufficient effect on enhancing the thermal conductivity based on dispersing metal fine particles is not obtained.

### Disclosure of the Invention

The present invention was accomplished with the view of such technical problem, and aims to provide a heat transfer medium liquid composition that is excellent in dispersion stability of metal and/or metal oxide particles and high in thermal conductivity.

In order to achieve the above purpose, the gist of the invention is a heat transfer medium liquid composition characterized by containing water and/or alcohol as the main component, the heat transfer medium liquid composition comprising:
(a) one kind or two or more kinds selected form metal and/or metal oxide particles having an average particle diameter in the range of from 0.001 to 0.1 µm;
(b) one kind or two or more kinds selected from polycarboxylic acids and/or salts thereof; and
(c) at least one kind of metal corrosion inhibitor.

In the invention, the heat transfer medium liquid composition of the invention contains the component (b), that is, polycarboxylic acid and/or salt thereof, in addition to the component (a), that is, metal and/or metal oxide particles and the component (c), that is, a metal corrosion inhibitor. The component (b) blocks reaction between the component (a) and the component (c) and prevents generation of a deposition or a supernatant, enabling the component (a) to exist in the heat transfer medium liquid composition in a stable dispersion state.

### Best Mode for Carrying Out the Invention

Hereinafter, the heat transfer medium liquid composition (hereinafter, simply referred to as the composition) of the invention will be described in more detail. The composition of the invention contains water and/or alcohol as the main component. Examples of the alcohol include monohydric alcohols such as methyl alcohol, ethyl alcohol and propyl alcohol, dihydric alcohols such as ethylene glycol, propylene glycol, butylene glycol, hexylene glycol, diethylene glycol and triethylene glycol, and polyhydric alcohol such as glycerine. These may be used individually or in combination of plural kinds. Among them, ethylene glycol and/or propylene glycol are preferable from the point of handling properties, price and ready availability.

The composition of the invention contains components (a) to (c) described below as well as the main component consisting of water and/or alcohol. The component (a) is metal and/or metal oxide particles having an average particle diameter of 0.001-0.1 µm.

Examples of the metal and/or metal oxide particle include one kind or two or more kinds selected from metals such as cupper, nickel, silver, aluminum, iron and cobalt, and metal oxides such as cupper oxide, aluminum oxide, titanium oxide, manganese oxide and iron oxide. Among the aforementioned metal and metal oxide, in particular, cupper, cupper oxide, aluminum oxide and titanium oxide are preferred because of the point that they are excellent in property of enhancing the thermal conductivity of the composition.

These metals and metal oxides can be obtained according to publicly known methods of forming fine particles such as the evaporation condensation method in which metal is heated and evaporated, and condensed in the gas to give fine particles, and the vapor-phase reaction method in which a metal compound is thermally degraded in vapor phase and allowed to react with oxygen to give metal oxide fine particles.

In the composition of the invention, metal or metal oxide fine particles having a mean particle diameter of 0.001-0.1 µm, because particles having an average particle diameter of 0.001-0.1 µm are excellent in dispersibility. From a point of dispersibility, particles having an average particle diameter of 0.001-0.05 µm are preferable.

Content of the component (a) in the composition is not particularly limited, but that in a range of from 0.01 to 10 weight % is desirable from a point of enhancing the thermal conductivity and stability in the composition.

Next, description will be given about the component (b). The component (b) is polycarboxylic acid and/or salt thereof. Preferably it is aliphatic polycarboxylic acid having from 20 to 30 carbons and/or salt thereof. Specifically, there can be mentioned any one kind or two or more kinds of polymerization products of maleic acid and/or salts thereof, maleic acid-acrylic acid-vinyl acetate copolymer and/or salts thereof, phosphonocarboxylic acid and/or salts thereof represented by the following formula A, phosphonobutane tricarboxylic acid and/or salts thereof represented by the following formula B, and bis(polycarboxyethyl)phosphinic acid and/or salts thereof represented by the following formula C: 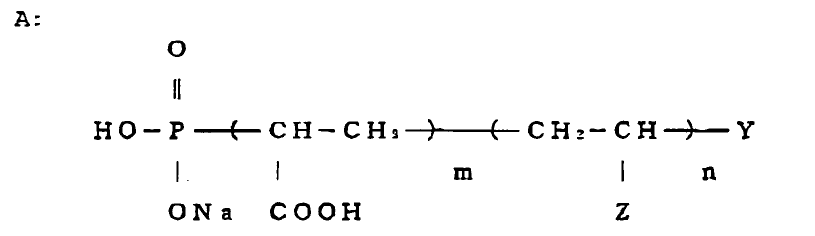 in the formula A:
5 ≤ m+n ≤ 20;
Z represents -CONHC(CH₃)₂CH₂SO₃Na; and
Y represents any of -H, -SO₄ and -HPO₃-Na: 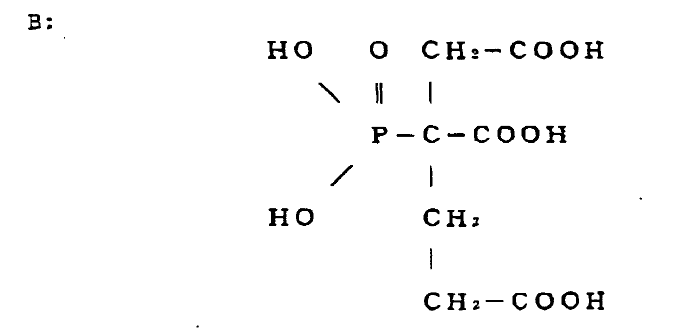 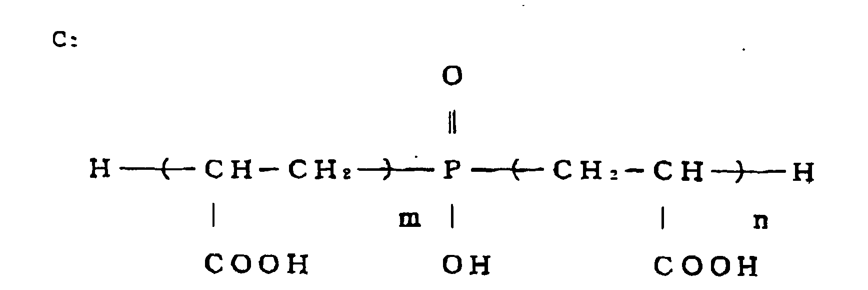
in the formula C, 5 ≤ m+n ≤ 20.

Among the polycarboxylic acids and/or salts thereof exemplified above, polymerization products of maleic acid and/or salts thereof, maleic acid-acrylic acid-vinyl acetate copolymer and/or salts thereof are preferred because of the point that they are excellent in property of blocking reaction between the component (a) and the component (c) contained in the composition of the invention.

Content of the polymerization product of maleic acid and/or salt thereof in the composition is not particularly limited, but in order to secure sufficient performance for blocking the reaction between the component (a) and the component (c), one in a range of from 0.01 to 20 weight % is desirable.

The component (c), in other words, a metal corrosion inhibitor is one for inhibiting corrosion of metal used in an internal-combustion engine, an electric motor, a hot-water supply system, a heating system, a cooling system, a freezing system, or a snow melting system and road heating, or the like (hereinafter, referred to as an internal-combustion engine and so on) to which the composition is applied as a heat transfer medium.

Specific examples of the metal corrosion inhibitor include phosphoric acid and/or salts thereof, aliphatic carboxylic acids and/or salts thereof, aromatic carboxylic acids and/or salts thereof, triazoles,' thiazoles, silicates, nitrates, nitrites, borates, molybdates and amine salts.

Examples of the phosphoric acid and/or salt thereof include orthophosphoric acid, pyrophosphoric acid, hexametaphosphoric acid, tripolyphosphoric acid and these alkali metal salts, preferably sodium salt and potassium salt.

Examples of the aliphatic carboxylic acid and/or salt thereof include pentanoic acid, hexanoic acid, heptanoic acid, octanoic acid, nonanoic acid, decanoic acid, 2-ethylhexanoic acid, adipic acid, suberic acid, azelaic acid, sebacic acid, undecanoic acid, dodecandioic acid and these alkali metal salts, preferably sodium salt and potassium salt.

Examples of the aromatic carboxylic acid and/or salt thereof include benzoic acid, toluic acid, p-tert-butylbenzoic acid, phthalic acid, p-methoxybenzoic acid, cinnamic acid and these alkali metal salts, preferably sodium salt and potassium salt.

Examples of the triazole include benzotriazole, methylbenzotriazole, cyclobenzotriazole and 4-phenyl-1,2,3-triazole.

Examples of the thiazole include mercaptobenzothiazole and its alkali metal salts, preferably sodium salt and potassium salt.

Examples of the silicate include sodium and potassium salts of metasilicic acid and an aqueous solution of sodium silicate represented by Na₂O/XSiO₂ (X is 0.5-3.3) which is called liquid glass. Examples of the nitrate include sodium nitrate and potassium nitrate, and examples of the nitrite include sodium nitrite and potassium nitrite. Examples of the borate include sodium tetraborate and potassium tetraborate.

Examples of the molybdate include sodium molybdate, potassium molybdate and ammonium molybdate. Examples of the amine salt include monoethanol amine, diethanol amine, triethanol amine, monoisopropanol amine, diisopropanol amine and triisopropanol amine.

In the internal-combustion engine and so on to which the composition of the invention is applied, metal such as iron, aluminum, cupper or alloy thereof is used. Therefore, in order to inhibit efficiently corrosion of these metals, it is desirable to use plural kinds of the above exemplified metal corrosion inhibitors in combination.

In this connection, the composition of the invention may be suitably added, for example, with a pH adjusting agent such as sodium hydroxide or potassium hydroxide, a antiforming agent or a coloring agent in a range that gives no effect on the thermal conductivity, in addition to the aforementioned components (a) to (c).

### Examples

Hereinafter, the composition of the invention will be described in detail while quoting examples of preferable Examples and comparing the same with Comparative Examples and Conventional Examples.

In Table 1, there are listed compositions in Examples 1-5, Comparative Examples 1-5, and Conventional Examples 1-2. Respective Examples 1-5 use the composition of the invention, in which pH is adjusted so as to become 7-9 with potassium hydroxide.

Each composition in Comparative Examples 1-3 is a blending example without the component (b), that is, polycarboxylic acid and/or salt thereof, and a composition in Comparative Example 4 is a blending example without the component (b) and component (c), that is, a metal corrosion inhibitor.

A composition in Conventional Example 1 is an example that is blended so as to contain the components (a) and (c), and carboxylate instead of the component (b). A composition in Conventional Example 2 is an example that is blended so as to contain the components (a) and (c), and thioglycolic acid instead of the component (b).

In Table 1, evaluation results of dispersion stability for respective compositions are also listed. Evaluation of the dispersion stability was conducted by blending the composition, which was left at rest for 24 hours, followed by observing appearance of the composition and measuring deposition amount according to the centrifugal separation method defined in JIS K 2503 (method of testing aircraft lubricating oil).

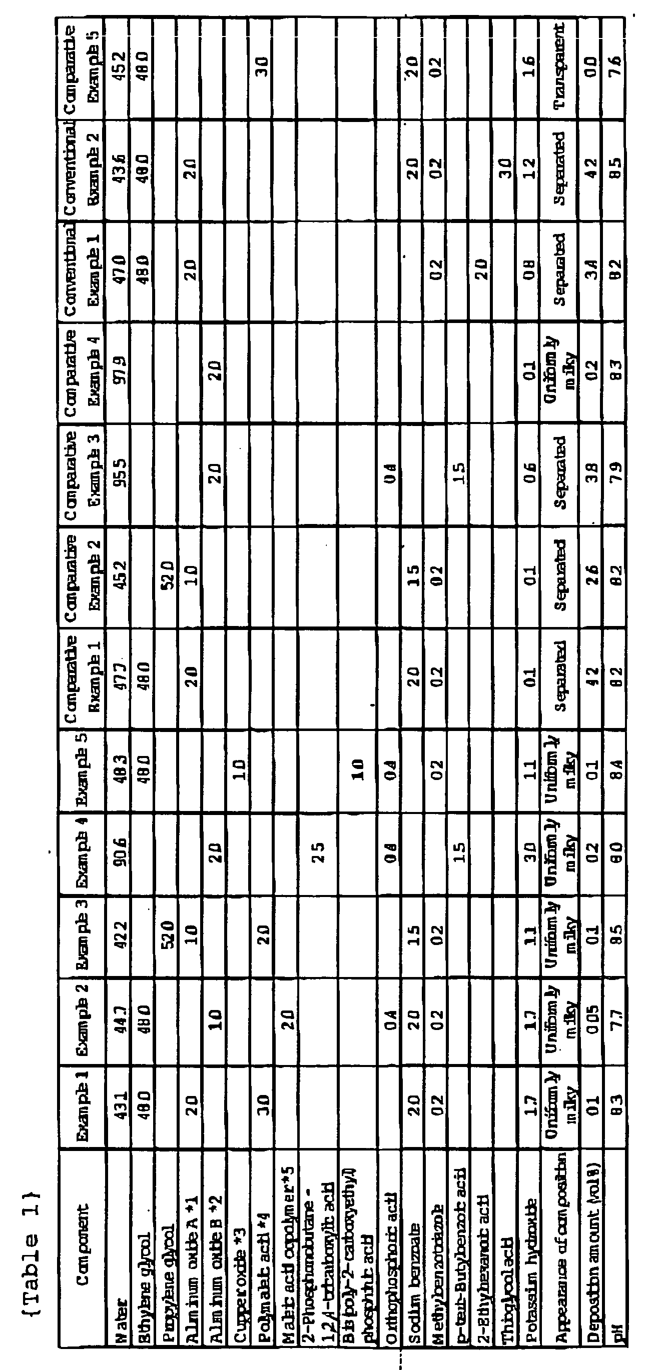

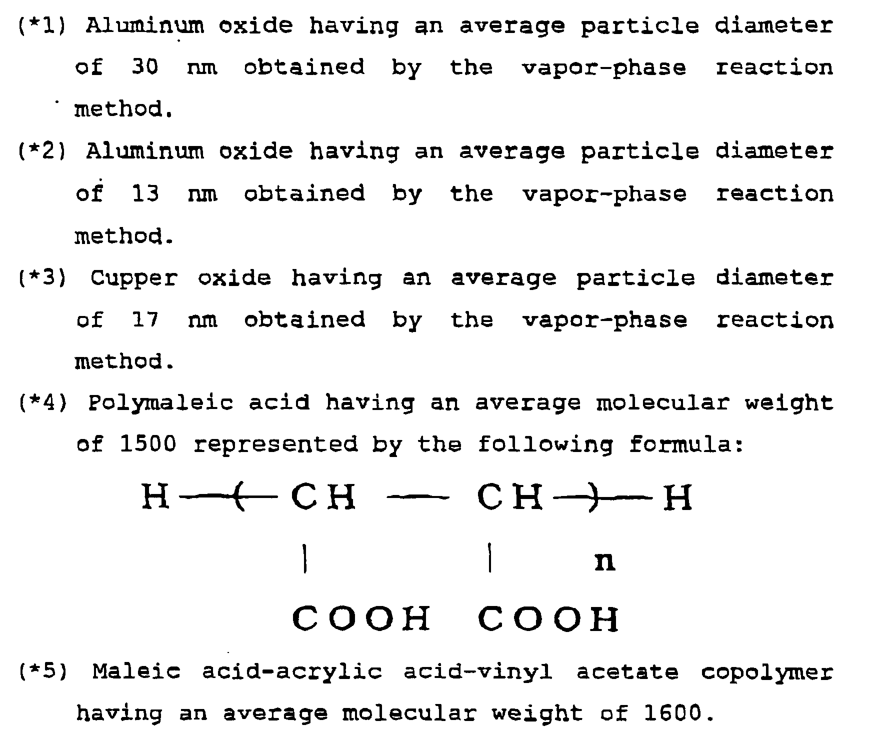

From the Table 1, it was confirmed that the respective compositions in Examples 1-5 had an appearance of uniform white milky state, and that approximately uniform dispersion state was maintained. On the other hand, as for the appearance of the respective compositions in Comparative Examples 1-3, it was confirmed that dispersion state was broken at an early timing after blending to generate a deposition and, as the result, to form a layer of the deposition at the bottom of a container, leading to a separated state.

When considering respective examples from a point of the deposition amount, it was confirmed that only a comparatively small amount of deposition generated in the compositions in Examples 1-5, but that a very large amount of deposition generated in compositions in Comparative Examples 1-3. Regarding Comparative Example 4, it was confirmed that, since no metal corrosion inhibitor causing generation of deposition was contained in the composition, no coagulating deposition generated.

Further, regarding Conventional Examples 1 and 2, a very large amount of deposition generated, as was the case for the compositions in Comparative Examples 1-3, to confirm that carboxylate or thioglycolic acid did not contribute to dispersion stability of the particle.

Next, regarding Example 1 of the invention and Comparative Example 5 that contains no metal particle, respective thermal conductivities were measured. Measurement of the thermal conductivity was conducted by the transient hot plane source technique called a hot disc method. The result is listed in Table 2.

**Table 2**

| Item | Example 1 | Comparative Example 5 |
|---|---|---|
| Thermal conductivity [W/mK (25 °C)] | 0.52 | 0.42 |

From Table 2, it was confirmed that the composition in Example 1 had a thermal conductivity improved by 23 % compared with the composition in Comparative Example 5 that contains no aluminum oxide (metal particle).

### Advantage of the Invention

Since the composition of the invention comprises water and/or alcohol as the main component and, in addition, (a) one kind or two or more kinds selected from metal and/or metal oxide particles having an average particle diameter of 0.001-0.1 µm, (b) one kind or two or more kinds selected from polycarboxylic acids and/or salts thereof, and (c) at least one kind of a metal corrosion inhibitor, it exerts such excellent effects as excellent dispersion stability and high thermal conductivity compared with conventional heat transfer mediums.

Accordingly, the composition of the present invention is extremely useful as a coolant for an internal-combustion engine, a motor and the like, a heat transfer medium for a hot-water supply, heating, cooling and freezing system, and a heat transfer medium for a snow melting system, road heating and the like.

## Claims

1. A heat transfer medium liquid composition comprising water and/or alcohol as the main component, the heat transfer medium liquid composition comprising:
(a) one kind or two or more kinds selected from metal and/or metal oxide particles having an average particle diameter of from 0.001 to 0-1 µm;
(b) one kind or two or more kinds selected from polycarboxylic acids and/or salts thereof; and
(c) at least one kind of a metal corrosion inhibitor.

2. The heat transfer medium liquid composition according to claim 1, wherein the alcohol is ethylene glycol and/or propylene glycol.

3. The heat transfer medium liquid composition according to claim 1, wherein the metal and/or metal oxide particles consists of any of cupper, cupper oxide, aluminum oxide, and titanium oxide.

4. The heat transfer medium liquid composition according to claim 3, wherein the metal and/or metal oxide particles is aluminum oxide, which is contained at a ratio of from 0.01 to 10 weight %.

5. The heat transfer medium liquid composition according to claim 1, wherein the polycarboxylic acid and/or salt thereof is any of polymerization products of maleic acid and/or salts thereof, maleic acid-acrylic acid-vinyl acetate copolymer and/or salts thereof, phosphonocarboxylic acid and/or salts thereof represented by the following formula A, phosphonobutane tricarboxylic acid and/or salts thereof represented by the following formula B, and bis(polycarboxyethyl)phosphinic acid and/or salts thereof represented by the following formula C: 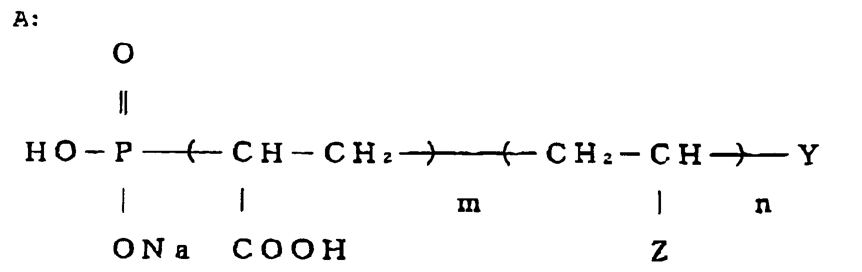 in the formula A:
5 ≤ m+n ≤ 20;
Z represents -CONHC (CH₃)₂CH₂SO₃Na; and
Y represents any of -H, -SO₄ and -HPO₃-Na; 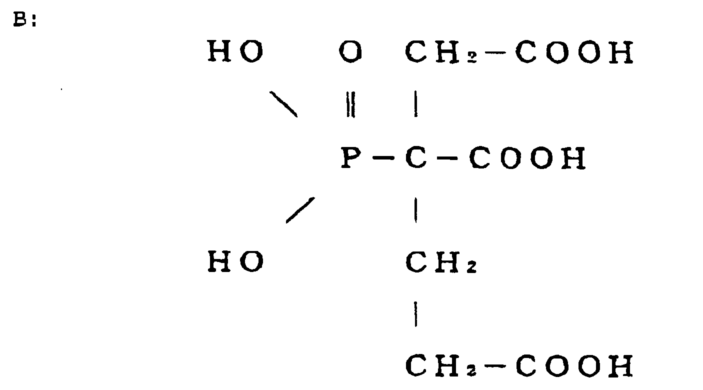 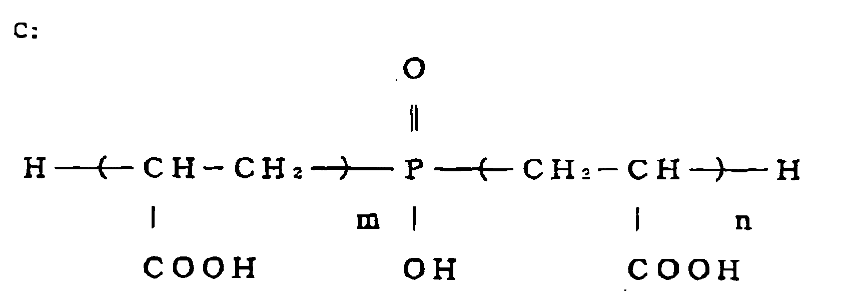
in the formula C, 5 ≤ m+n ≤ 20.

6. The heat transfer medium liquid composition according to claim 5, wherein the polycarboxylic acid and/or salt thereof is polymerization product of maleic acid and/or salt thereof.

7. The heat transfer medium liquid composition according to claim 6, wherein the polymerization product of maleic acid and/or salt thereof is contained at a ratio of from 0.01 to 20 weight %.

8. The heat transfer medium liquid composition according to claim 1, wherein the metal corrosion inhibitor is any of phosphoric acid and/or salts thereof, aliphatic carboxylic acids and/or salts thereof, aromatic carboxylic acids and/or salts thereof, triazoles, thiazoles, silicates, nitrates, nitrites, borates, molybdates and amine salts.

## Patentansprüche

1. Flüssige Wärmeträgerzusammensetzung mit Wasser und/oder Alkohol als eine Hauptkomponente, wobei die flüssige Wärmeträgerzusammensetzung Folgendes aufweist:
(a) eine, zwei oder mehr Arten von Metall- und/oder Metalloxidpartikeln mit einem durchschnittlichen Partikeldurchmesser von 0,001 bis 0,1 µm;
(b) eine, zwei oder mehrere Arten von Polycarbonsäure und/oder deren Salze;
(c) wenigstens ein Metallkorrosionsschutzmittel.

2. Flüssige Wärmeträgerzusammensetzung gemäß Anspruch 1, wobei der Alkohol ein Ethylenglycol und/oder Propylenglycol ist.

3. Flüssige Wärmeträgerzusammensetzung gemäß Anspruch 1, wobei die Metall- und/oder die Metalloxidpartikel aus Kupfer, Kupferoxid, Aluminiumoxid oder Titaniumoxid bestehen.

4. Flüssige Wärmeträgerzusammensetzung gemäß Anspruch 3, wobei die Metall- und/oder Metalloxidpartikel aus Aluminiumoxid bestehen, das in einem Verhältnis zwischen 0,01 bis 10 Gewichtsprozent enthalten ist.

5. Flüssige Wärmeträgerzusammensetzung gemäß Anspruch 1, wobei die Polycarbonsäure und/oder deren Salz ein Polymerisationsprodukt einer Maleinsäure und/oder deren Salze, Maleinsäure-Acrylsäure-Venylacetatcarbonpolymere und/oder deren Salze, Phosphonocarbonsäure und/oder deren Salze gemäß der folgenden Formel A, Phosphonobutantricarbonsäure und/oder deren Salze gemäß der folgenden Formel B, oder bis (Polycarboxyethyl)phosphinsäure und/oder deren Salze gemäß der folgenden Formel C, ist: 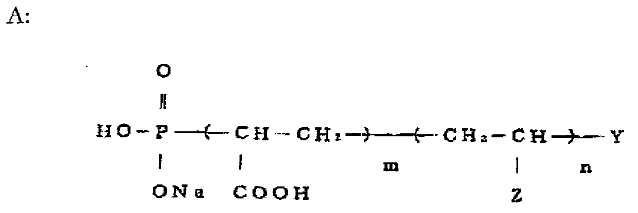 in Formel A:
5 ≤ m+n ≤ 20;
Z repräsentiert -CONHC(CH₃)₂CH₂SO₃Na; und
Y repräsentiert -H, -SO₄ oder -HPO₃-Na; 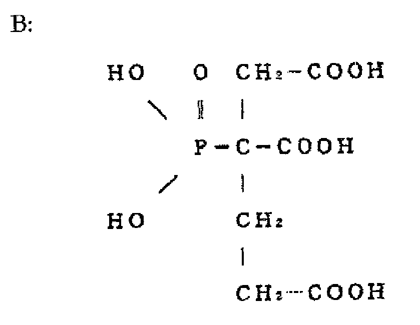 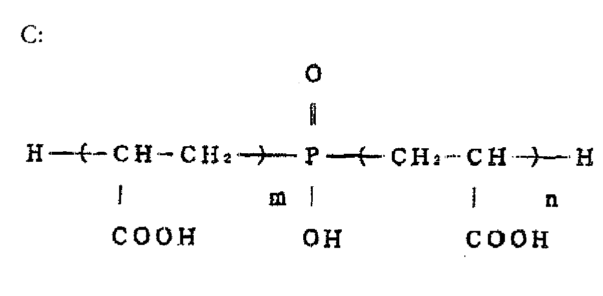
in Formel C:
5 ≤ m+n ≤ 20,

6. Flüssige Wärmeträgerzusammensetzung gemäß Anspruch 5, wobei die Polycarbonsäure und/oder deren Salz ein Polymerisationsprodukt einer Maleinsäure und/oder deren Salz ist.

7. Flüssige Wärmeträgerzusammensetzung gemäß Anspruch 6, wobei das Polymerisationsprodukt der Maleinsäure und/oder deren Salz in einem Verhältnis von 0,1 bis 20 Gewichtsprozent enthalten ist.

8. Flüssige Wärmeträgerzusammensetzung gemäß Anspruch 1, wobei das Metallkorrosionsschutzmittel eine Phosphorsäure und/oder deren Salze, eine aliphatische Carbonsäure und/oder deren Salze eine aromatische Carbonsäure, Triazole, Thiazole, Silikate, Nitrate, Nitrite, Borate, Molybdate oder amine Salze ist.

## Revendications

1. Composition liquide d'agent de transfert de chaleur comprenant de l'eau et/ou un alcool comme composant principal, la composition liquide d'agent de transfert de chaleur comprenant :
(a) un type ou deux types ou plus choisis parmi les particules métalliques et/ou d'oxydes métalliques ayant un diamètre de particule moyen compris entre 0,001 et 0,1 µm ;
(b) un type ou deux types ou plus choisis parmi les acides polycarboxyliques et/ou les sels de ceux-ci ; et
(c) au moins un type d'inhibiteur de corrosion métallique

2. Composition liquide d'agent de transfert de chaleur selon la revendication 1, dans laquelle l'alcool est de l'éthylène glycol et/ou du propylène glycol

3. Composition liquide d'agent de transfert de chaleur selon la revendication 1, dans laquelle les particules métalliques et/ou d'oxydes métalliques se composent de l'un quelconque d'entre le cuivre, l'oxyde de cuivre, l'oxyde d'aluminium et l'oxyde de titane

4. Composition liquide d'agent de transfert de chaleur selon la revendication 3, dans laquelle les particules métalliques et/ou d'oxydes métalliques sont de l'oxyde d'aluminium qui est contenu selon un rapport compris entre 0,01 et 10 % pondéraux

5. Composition liquide d'agent de transfert de chaleur selon la revendication 1, dans laquelle l'acide polycarboxylique et/ou un sel de celui-ci sont l'un quelconque de produits de polymérisation de l'acide maléique et/ou de sels de celui-ci, du copolymère acide maléique - acide acrylique - acétate de vinyle et/ou de sels de celui-ci, de l'acide phosphonocarboxylique et/ou de sels de celui-ci représentés par la formule (A) ci-dessous, de l'acide phosphonobutane tricarboxylique et/ou de sels de celui-ci représentés par la formule (B) ci-dessous, et de l'acide bis(polycarboxyéthyl)phosphinique et/ou de sels de celui-ci représentés par la formule (C) ci-dessous : 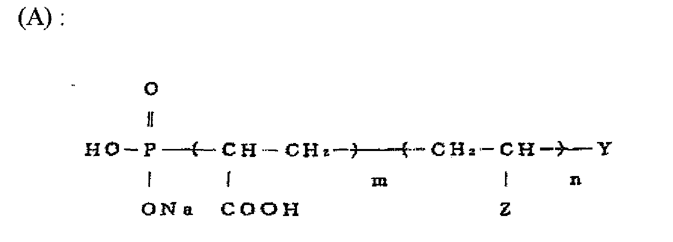 où dans la formule (A) :
5 ≤m+n ≤20;
Z représente -CONHC(CH₃)₂CH₂SO₃Na ; et
Y représente l'un quelconque parmi -H, -SO₄, et -HPO₃-Na; 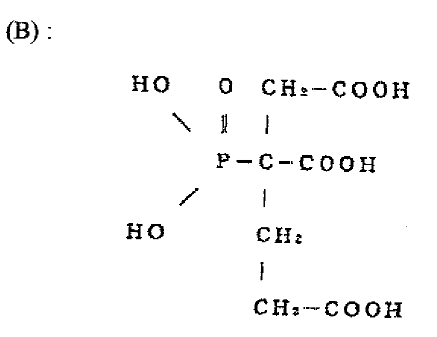 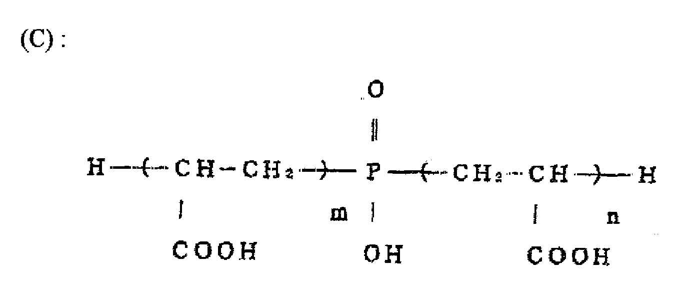
où dans la formule (C), 5 ≤ m+n ≤ 20.

6. Composition liquide d'agent de transfert de chaleur selon la revendication 5, dans laquelle l'acide polycarboxylique et/ou le sel de celui-ci est un produit de polymérisation de l'acide maléique et/ou d'un sel de celui-ci

7. Composition liquide d'agent de transfert de chaleur selon la revendication 6, dans laquelle le produit de polymérisation de l'acide maléique et/ou d'un sel de celui-ci est contenu selon un rapport compris entre 0,01 et 20 % pondéraux

8. Composition liquide d'agent de transfert de chaleur selon la revendication 1, dans laquelle l'inhibiteur de corrosion métallique est l'un quelconque d'entre l'acide phosphorique et/ou les sels de celui-ci, les acides carboxyliques aliphatiques et/ou les sels de ceux-ci, les acides carboxyliques aromatiques et/ou les sels de ceux-ci, les triazoles, les thiazoles, les silicates, les nitrates, les nitrites, les borates, les molybdates et les sels aminés
